# EUROPÄISCHE PATENTSCHRIFT

(11) **EP 1 251 041 B1**
(45) Veröffentlichungstag und Bekanntmachung des Hinweises auf die Patenterteilung: **07.09.2005**
(21) Anmeldenummer: 02006683.3
(22) Anmeldetag: 26.03.2002
(51) Int. Cl.: B60R 21/20

(54) **Gassackmodul mit Silikonelement zur Schwingungsentkopplung**
Airbag module comprising a silicon element for vibration decoupling
Module de coussin gonflable comprenant un élément de silicone pour découplage de vibrations

(30) Priorität: 28.03.2001 DE 20105434 U
(43) Veröffentlichungstag der Anmeldung: 23.10.2002
(73) Patentinhaber: TRW Automotive Safety Systems GmbH, 63743 Aschaffenburg (DE)
(72) Erfinder: Lovell, Mark, Mesa, Arizona 85208 (US); Nottebaum, Thorsten, Dr., 63839 Kleinwallstadt (DE)
(74) Vertreter: Kitzhofer, Thomas

(56) Entgegenhaltungen:
- EP-A- 1 010 589
- WO-A-00/15470
- WO-A-97/46424
- DE-U- 20 016 637
- US-A- 2 128 069
- US-A- 5 410 114
- US-A- 5 692 768

## Beschreibung

Die Erfindung betrifft ein Gassackmodul nach dem Oberbegriff des Anspruchs 1.

Ein solches Gassackmodul hat ein Trägerelement, das beispielsweise ein Halteblech für das Gassackmodul sein oder das Gehäuse des Moduls sein kann, in dem der Gasgenerator und der Gassack angeordnet sind. Es sind zahlreiche Lenkrad-Gassackmodule vorgeschlagen worden, bei denen Komponenten des Moduls vom Rest des Moduls schwingungsentkoppelt gelagert sind oder schwingungsdämpfend für das Lenkrad wirken, so daß die Schwingungen am Lenkradkranz gedämpft werden. Die Komponenten werden dabei üblicherweise auf oder in Kunststoffringen gelagert, die bislang aus Styrol-Buthadien oder aus Ethylen-Propylen-Terpolymeren bestehen. Die bisherigen Lager aus Kunststoff werden auf eine Temperatur von 20° Celsius ausgelegt. Das bedeutet, daß die Dämpfungsfrequenz in diesem Temperaturbereich der Erregerfrequenz möglichst exakt entspricht.

Aus der US-A-5 692 768 ist ein Gassackmodul mit einem Rohrgasgenerator bekannt, der an seinen beiden Enden über Halbschalen aus Silikon im Modulgehäuse gelagert ist.

Aus der gattungsbildenden WO 00/15470 ist ein Gassackmodul bekannt, in welchem der Gasgenerator mittels eines Elastomerrings in einem topfförmigen Aufnahmegehäuse gelagert ist.

Die Aufgabe der Erfindung besteht darin, ein Gassackmodul bereitzustellen, das über den gesamten Temperaturbereich von -40° bis +85° Celsius eine Lagerung für die schwingungsentkoppelte Komponente mit möglichst gleichbleibender Dämpfungsfrequenz hat.

Dies wird durch ein Gassackmodul nach Anspruch 1 erreicht. Der große Vorteil des Silikons ist seine fast gleichbleibende Dämpfungsfrequenz über den gesamten anzustrebenden Einsatzbereich des Moduls, nämlich von -40° Celsius bis +85° Celsius. Somit hat das erfindungsgemäße Gassackmodul eine Komponente, die auch bei Extremtemperaturen eine gute Schwingungsentkoppelung aufweist. Das elastische Element Lagert den Gasgenerator schwingungsentkoppelt im Modul. Der Gasgenerator stellt ein relativ schweres Teil des Moduls dar, das als Schwingungstilger wirken kann. Das elastische Element umgibt den Gasgenerator umfangsmäßig sogar vollständig. Dies hat den Vorteil, daß die Dämpfung und Lagerung in allen Richtungen in der Umfangsebene stattfindet. Weiter ist vorgesehen, daß der Gasgenerator einen Ringflansch aufweist und das elastische Element eine Nut zur Aufnahme des Ringflansches. Bei dieser Ausführungsform zeichnete sich das Silikon durch seine leichte Verformbarkeit aus, so daß ohne große Krafteinwirkung der Gasgenerator in die Nut eingedrückt werden kann. Die vorgesehene Klemmvorrichtung befestigt das Element modulseitig durch Klemmen, wobei bei der Ausführungsform mit dem Ringflansch die Klemmvorrichtung das Element axial klemmt.

Weitere Merkmale und Vorteile der Erfindung ergeben sich aus der nachfolgenden Beschreibung und aus der nachfolgenden Zeichnung, auf die Bezug genommen wird.

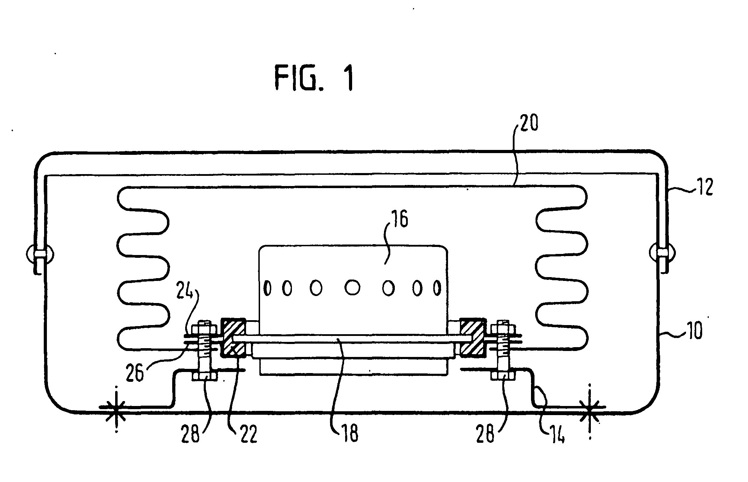

Figur 1 zeigt eine Querschnittsansicht durch ein Gassackmodul nach der Erfindung.

In Figur 1 ist ein Gassackmodul gezeigt, das an einem Fahrzeuglenkrad befestigt wird. Das Modul besteht aus zahlreichen Komponenten, einem topfförmigen Aufnahmegehäuse 10, an dem vorderseitig eine Abdeckkappe 12 befestigt ist, einem Trägerelement 14 in Form eines am Boden des Aufnahmegehäuses 10 befestigten Bleches, einem Gasgenerator 16 mit einem umlaufenden Ringflansch 18 und einem Gassack 20.

Eine der Komponenten, im vorliegenden Fall der Gasgenerator 16, ist im Modul schwingungsentkoppelt gelagert, was durch ein elastisches, aus Silikon bestehendes Element 22 ermöglicht wird. Das Element 22 ist ein umlaufender Silikonring mit einer umlaufenden radial innenseitigen Nut, die vollständig vom Ringflansch 18 ausgefüllt ist. Das elastische Element 22 nimmt radial innenseitig den Gasgenerator 16 auf und ist an seinen axialen Enden, das heißt in bezug auf Figur 1 oben und unten, durch eine Klemmvorrichtung in Form von zwei Blechen 24, 26 modulseitig, genauer am Trägerlement 14, gelagert. Die Bleche haben jeweils einen radial äußeren Umfangsflansch mit fluchtenden Öffnungen, durch die sich jeweils eine Schrauben-Mutterverbindung 28 erstreckt, wobei diese Verbindungen auch durch Öffnungen im Trägerelement 14 ragen. Der Gassack, genauer der Rand seiner sogenannten Einblasöffnung, wird zwischen dem Trägerelement 14 und dem Blech 26 geklemmt. Die modulseitige Befestigung des Elements 22 durch die Bleche 24, 26 dient somit gleichzeitig der Festlegung des Gassacks 20.

Das elastische Element 22 aus Silikon hat über den Temperaturbereich von -40 bis +85° Celsius eine annähernd gleichbleibende Dämpfungsfrequenz, so daß der Gasgenerator vom Rest des Moduls schwingungsentkoppelt ist und die Schwingungen am Lenkradkranz, den der Fahrer erfaßt, sehr gering gehalten werden können.

Es können aber auch andere Komponenten des Gassackmoduls schwingungsentkoppelt gelagert werden, beispielsweise die Einheit aus Gasgenerator 16 und Gassack 20 oder die Einheit aus Gasgenerator 16, Gassack 20 samt Trägerelement 14. Bei letzterer Ausführungsform wäre beispielsweise das elastische Element oder wären mehrere elastische Elemente am Übergang des Trägerelements 14 zum Boden des Aufnahmegehäuses 10 vorgesehen.

## Patentansprüche

1. Gassackmodul aus mehreren Komponenten, die wenigstens
ein Trägerelement (14),
einen Gasgenerator (16) mit einem Ringflansch (18) und
einen Gassack (20) umfassen,
wobei der Gasgenerator (16) mittels wenigstens eines elastischen Elements (22) schwingungsentkoppelt im Gassackmodul gelagert ist,
wobei das Element (22) ringförmig ausgebildet ist und den Gasgenerator umfangsmäßig vollständig umgibt und auf seiner Innenseite eine umlaufende Nut hat, die den Ringflansch (18) aufnimmt, und
wobei das Element (22) und der Gasgenerator modulseitig durch ein axial oberes und ein axial unteres ringförmiges Blech (24, 26) befestigt sind,
wobei das obere Blech (24) auf einer Oberseite und das untere Blech (26) auf einer Unterseite des Elements (22) anliegen,
**dadurch gekennzeichnet, daß** sich Befestigungsmittel (28) durch die Bleche (24, 26) erstrecken und diese axial zusammendrücken, um das Element (22) axial zu klemmen, und die Bleche (24, 26 ) und damit den Gasgenerator (16) und das Element (22) am Trägerteil (14) fixieren, und daß das Element (22) aus Silikon besteht.

2. Gassackmodul nach Anspruch 1, **dadurch gekennzeichnet, daß** die Bleche (24, 26) über den Außenrand des Ringflansches (18) hinaus radial nach innen ragen.

3. Gassackmodul nach einem der vorhergehenden Ansprüche, **dadurch gekennzeichnet, daß** die Bleche (24, 26) jeweils einen Absatz besitzen, durch den bei jedem Blech (24, 26) ein radial innerer Abschnitt von einem radial äußeren getrennt ist, und wobei die radial inneren Abschnitte der Bleche (24, 26) axial weiter voneinander beabstandet sind als die radial äußeren und wobei sich das Element (22) nur zwischen den radial inneren Abschnitten erstreckt.

4. Gassackmodul nach einem der vorhergehenden Ansprüche, **dadurch gekennzeichnet, daß** der Gassack (20) mittels der Befestigungsmittel (28) axial zwischen dem unteren Blech (26) und dem Trägerelement (14) geklemmt und damit modulseitig befestigt ist.

## Claims

1. A gas bag module made up of several components, which comprise at least
a carrier element (14),
a gas generator (16) having an annular flange (18), and
a gas bag (20),
the gas generator (16) being mounted in the gas bag module so as to be neutralized with regard to vibration by means of at least one elastic element (22),
the element (22) having the shape of a ring and completely surrounding the gas generator peripherally and having on its inside a continuous groove which receives the annular flange (18), and
the element (22) and the gas generator being fastened on the module side by an axially upper and an axially lower annular metal plate (24, 26),
the upper metal plate (24) resting against an upper side and the lower metal plate (26) resting against an underside of the element (22),
**characterized in that**
fastening means (28) extend through the metal plates (24, 26), pressing them together axially in order to clamp the element (22) axially, and fix the metal plates (24, 26) and hence the gas generator (16) and the element (22) in place at the carrier part (14), and **in that** the element (22) consists of silicone.

2. The gas bag module according to claim 1, **characterized in that** the metal plates (24, 26) protrude radially inwards beyond the outer edge of the annular flange (18).

3. The gas bag module according to any of the preceding claims, **characterized in that** the metal plates (24, 26) each have a shoulder which separates a radially inner section from a radially outer section of each metal plate (24, 26), and the radially inner sections of the metal plates (24, 26) being spaced farther apart axially than the radially outer sections, and the element (22) extending only between the radially inner sections.

4. The gas bag module according to any of the preceding claims, **characterized in that** the gas bag (20) is clamped axially between the lower metal plate (26) and the carrier element (14) by means of the fastening means (28) and is thereby fastened on the module side.

## Revendications

1. Module de coussin à gaz constitué de plusieurs composants qui comprennent au moins
un élément support (14),
un générateur de gaz (16) comportant une bride annulaire (18) et
un coussin à gaz (20),
le générateur de gaz (16) étant monté dans le module de coussin à gaz de manière à être découplé vis-à-vis des vibrations au moyen d'au moins un élément élastique (22),
l'élément (22) étant réalisé de forme annulaire et entourant entièrement la circonférence du générateur de gaz et ayant sur sa face intérieure une gorge périphérique qui reçoit la bride annulaire (18), et
l'élément (22) et le générateur de gaz étant fixés côté module par une tôle annulaire supérieure axiale (24) et par une tôle annulaire inférieure axiale (26),
la tôle supérieure (24) reposant sur la face supérieure et la tôle inférieure (26) sur la face inférieure de l'élément (22),
**caractérisé en ce que**
des moyens de fixation (28) s'étendent à travers les tôles (24, 26) et compriment celles-ci axialement pour serrer axialement l'élément (22) et pour fixer les tôles (24, 26) et par conséquent le générateur de gaz (16) et l'élément (22) sur la partie support (14), et
**en ce que** l'élément (22) est en silicone.

2. Module de coussin selon la revendication 1, **caractérisé en ce que** les tôles (24, 26) font saillie vers l'intérieur radialement au-delà du bord extérieur de la bride annulaire (18).

3. Module de coussin selon l'une des revendications précédentes, **caractérisé en ce que** les tôles (24, 26) possèdent chacune un talon séparant un tronçon radialement intérieur d'un tronçon radialement extérieur sur chaque tôle (24, 26), les tronçons radialement intérieurs des tôles (24, 26) étant plus espacés axialement les uns des autres que les tronçons radialement intérieurs, et l'élément (22) ne s'étendant qu'entre les tronçons radialement intérieurs.

4. Module de coussin selon l'une des revendications précédentes, **caractérisé en ce que** le coussin à gaz (20) est serré axialement entre la tôle inférieure (26) et l'élément support (14) par les moyens de fixation (28) et est ainsi fixé côté module.
